Europäisches Patentamt

European Patent Office

Office européen des brevets

(11) Numéro de publication: **0 330 790**
**A2**

(12) **DEMANDE DE BREVET EUROPEEN**

(21) Numéro de dépôt: **88402584.2**

(51) Int. Cl.⁴: **B23Q 1/14 , F16H 21/10**

(22) Date de dépôt: **12.10.88**

(30) Priorité: **13.10.87 FR 8714483**

(43) Date de publication de la demande:
**06.09.89 Bulletin 89/36**

(84) Etats contractants désignés:
**AT BE CH DE ES FR GB GR IT LI LU NL SE**

(71) Demandeur: **E.N.S.A.I.T.**
**2, Place des Martyrs de la Résistance**
**F-59100 Roubaix(FR)**

(72) Inventeur: **Degre, Yvon**
c/o **2, Place des Martyrs de la Résistance**
**F-59070 Roubaix, Cédex I(FR)**
Inventeur: **Rinsveldt, Jean**
c/o **2, place des Martyrs de la Résistance**
**F-59070 Roubaix, Cédex I(FR)**

(54) **Dispositif de balayage mécanique.**

(57) L'invention est relative à un dispositif de balayage mécanique permettant de déplacer dans un plan horizontal bidirectionnellement un point, une droite, une surface ou un objet en abscisse "X" et/ou en ordonnée "Y". Elle trouvera notamment son application dans de nombreux domaines différents où des positionnements de pièces sont nécessaires.

Le dispositif de balayage mécanique, d'un point, d'une droite, d'une surface ou d'un objet (1) comprend des moyens de commande de déplacement (2) et (3).

Ces moyens de commande (2) et (3) sont disposés tels qu'ils créent au moins deux mouvements élémentaires dits "parallèles" dont les directions sont parallèles.

Le dispositif comporte en outre des moyens de liaison articulés (4) qui relient respectivement ledit point, droite, surface ou objet à déplacer (1) à chaque moyen de commande de déplacement (2, 3) aptes à transformer les deux mouvements élémentaires dits "parallèles" en deux mouvements élémentaires dits "orthogonaux".

Fig. 1

EP 0 330 790 A2

## DISPOSITIF DE BALAYAGE MECANIQUE

L'invention est relative à un dispositif de balayage mécanique permettant de déplacer dans un plan horizontal bidirectionnellement un point, une droite, une surface ou un objet en abscisse "x" et/ou en ordonnée "y".

Dans de nombreux domaines différents, il est nécessaire de déplacer, généralement un objet, selon deux coordonnées, en abscisse et en ordonnée. C'est le cas, par exemple, des positionnements de pièces de machines outils.

De plus, étant donné l'automatisation de plus en plus courante des tâches manuelles, on a besoin de positionner précisément des pièces ou des objets dans un plan selon des coordonnées repérées.

A ce sujet, il est connu des tables de positionnement constituées par deux moyens moteur de commande de déplacement disposés perpendiculairement entre eux, le premier pouvant déplacer l'objet en abscisse, le deuxième en ordonnée.

Enfin, ces tables sont commandées quelquefois par des dispositifs calculateurs qui, en fonction d'un modèle, permettent de positionner automatiquement l'objet.

De tels dispositifs sont utilisés dans tous les domaines, machine outil à commande numérique, machine textile, table traçante, déplacement de robots, déplacement de capteurs de mesure, déplacement de microscopes, etc.

Les problèmes de réalisation de ces dispositifs résident dans la précision qu'il faut apporter à l'usinage et dans l'encombrement des moyens de déplacement.

En effet, ces derniers sont toujours orthogonaux entre eux et limitent quelquefois la surface de balayage du dispositif ou rendent incommode l'utilisation par l'opérateur.

Ceci est particulièrement rencontré dans les cas où l'on a un déplacement suivant une des deux directions très important alors que l'autre est beaucoup plus limité. Par exemple, dans le domaine de la broderie, lorsqu'on cherche à mécaniser des machines à broder, il est nécessaire d'avoir un déplacement longitudinal important alors que le déplacement transversal est limité au pas de la broderie.

Le but de la présente invention est de proposer un dispositif de balayage mécanique, permettant de déplacer dans un plan horizontal bidirectionnellement un point, une droite, une surface ou un objet en abscisse "x" et/ou en ordonnée "y" réalisé selon une structure telle que les déplacements soient unidirectionnels pour éviter de disposer les moyens de commande de déplacement perpendiculairement entre eux.

Ainsi, on gagne en encombrement du dispositif de balayage, ce qui permet d'avoir un plan de travail beaucoup plus dégagé pour l'opérateur.

Un autre but de la présente invention est de proposer un dispositif de balayage mécanique dont les positions en abscisse et en ordonnée peuvent être parfaitement contrôlées et commandées par un système de commande automatique.

Un autre but de la présente invention est de proposer un dispositif de balayage mécanique qui autorise un positionnement simultané de deux objets, ce symétriquement à son axe longitudinal.

D'autres buts et avantages de la présente invention apparaîtront au cours de la description qui va suivre qui n'est cependant donnée qu'à titre indicatif et qui n'a pas pour but de la limiter.

Selon l'invention, le dispositif de balayage mécanique, permettant de déplacer dans un plan horizontal bidirectionnellement un point, une droite, une surface ou un objet, en abscisse "x" et/ou en ordonnée "y", comprenant des moyens de commande de déplacement, est caractérisé par le fait que lesdits moyens de commande de déplacement sont disposés tels qu'ils créent au moins deux mouvements élémentaires dits "parallèles" dont les directions sont parallèles, et qu'ils comportent des moyens de liaison articulés qui relient respectivement ledit point, droite, surface ou objet à déplacer à chaque moyen de commande de déplacement, aptes à transformer les deux mouvements élémentaires dits "parallèles" en deux mouvements élémentaires dits "orthogonaux".

La présente invention sera mieux comprise à la lecture de la description suivante, accompagnée des dessins qui en font partie intégrante.

La figure 1 représente schématiquement le principe de fonctionnement du dispositif de balayage mécanique de la présente invention.

La figure 2 montre un premier mode de réalisation du dispositif de balayage mécanique de la présente invention.

La figure 3 montre un second mode de réalisation du dispositif de la présente invention.

La figure 4 montre une variante d'exécution du dispositif représenté à la figure 2.

La figure 5 montre un exemple d'application du dispositif illustré à la figure 2.

La figure 6 illustre le principe de fonctionnement du dispositif de balayage mécanique de la présente invention, apte à déplacer notamment une droite ou une surface.

La figure 7 montre un mode de réalisation pratique du dispositif illustré à la figure 6.

La figure 8 montre un exemple d'application du dispositif illustré à la figure 7.

La figure 9 représente un graphe illustrant le déplacement cinématique d'un point par le dispositif de balayage mécanique de la présente invention.

La figure 10 illustre le principe de fonctionnement d'une variante du dispositif de balayage mécanique de la présente invention.

La présente invention vise un dispositif de balayage mécanique permettant de déplacer dans un plan horizontal, bidirectionnellement, un point, une droite, une surface ou un objet, en abscisse "x" et/ou en ordonnée "y".

En effet, dans de nombreux cas d'application, il est utile de positionner un point, une droite, une surface ou un objet dans un plan selon ses coordonnées "x" et "y" puis de contrôler son déplacement successif, ce selon l'application.

Par exemple, dans le cas de la table traçante, on dispose généralement d'une pointe traçante que l'on déplace et contrôle en "x" et "y" pour former tout signe, tel que lettres, figures géométriques ou autres.

De même dans le cas de machines outils, on déplace généralement la pièce ou encore l'outil selon des coordonnées précises pour effectuer des usinages.

Dans un autre domaine qu'est celui de la broderie, pour automatiser des machines à broder, il est nécessaire de déplacer le tissu par rapport à l'aiguille en fonction du motif désiré.

Comme rappelé ci-dessus, tous les dispositifs connus sont équipés de deux systèmes de commande de déplacement disposés perpendiculairement entre eux. La présente invention propose un mode de commande différent qui nécessite en quelque sorte un déplacement unidirectionnel.

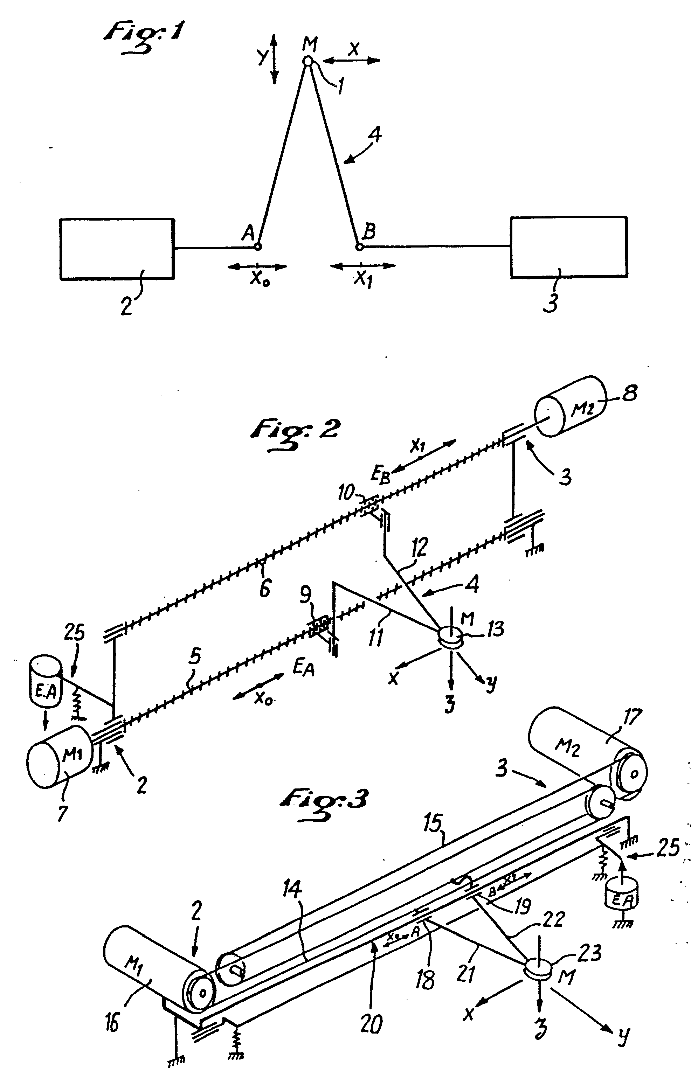

La figure 1 illustre le principe du dispositif de balayage mécanique de la présente invention.

Soit un point M, repéré (1) à déplacer selon des coordonnées prédéterminées X et Y. Le dispositif de la présente invention comporte des moyens de commande de déplacement (2) et (3) disposés tels qu'ils créent deux mouvements élémentaires dits "parallèles" appelés Xo et X1, dont les directions sont parallèles.

De plus, le dispositif de la présente invention comporte des moyens de liaison articulés (4) qui relient respectivement ledit point M à chaque moyen de commande de déplacement (2) et (3), aptes à transformer les deux mouvements élémentaires dits "parallèles" Xo et X1 en deux mouvements élémentaires dits "orthogonaux" X et Y.

Bien que la figure 1 montre le déplacement d'un point M, ce principe est tout à fait adaptable à une droite, surface ou tout autre objet volumique à déplacer. A ce sujet, les figures 2, 3, 4 et 7 illustrent différentes réalisations structurelles.

Le fonctionnement du dispositif de la présente invention sera notamment compris avec le mode de réalisation té à la figure 2.

Dans ce cas, les moyens de commande de déplacement (2) et (3) sont constitués par deux tiges filetées (5, 6) commandées chacune par un organe moteur (7, 8).

Chaque tige filetée (5, 6) porte un chariot (9, 10) qui selon le sens de rotation de la tige se déplace positivement ou négativement selon les mouvements Xo et X1.

Pour obtenir des mouvements Xo et X1 parallèles, on dispose avantageusement parallèlement les deux tiges filetées (5) et (6).

Afin de transformer les deux mouvements élémentaires parallèles Xo et X1 en deux mouvements orthogonaux X et Y, le dispositif comporte des moyens de liaison articulés substantiellement constitués par un ensemble de tiges rigides (11) et (12) articulées à leur point de concours (13) formant une figure polygonale déformable.

Dans le cas de la réalisation de la figure 2, chaque chariot (9) et (10) porte une articulation de laquelle part une tige (11) ou (12) pour fermer un triangle articulé.

Ainsi, en déplaçant les deux chariots (9) et (10) selon les directions Xo et X1, on déforme le triangle, et étant donné que la longueur des tiges (11) et (12) est fixe, on augmente la hauteur de celui-ci, ce qui provoque un déplacement du point M (13) selon les coordonnées X et Y dépendantes de Xo et X1.

Autrement dit, une différence relative dans le déplacement des chariots (9) et (10) selon les directions Xo et X1 provoque, selon le sens et la valeur absolue des mouvements, soit un déplacement en X, soit un déplacement en Y, soit un déplacement en X et en Y.

A ce sujet, la figure 9 illustre l'étude géométrique des déplacements du point M, point de concours (13) des deux tiges articulées (11, 12).

3

Si l'on veut déplacer le point M vers le point M', il faudra agir sur les deux organes moteurs (7, 8) de façon à provoquer le déplacement d1 du chariot (9) sur la tige filetée (5) et simultanément le déplacement d2 du chariot (10) sur sa tige filetée (6).

Sur le plan géométrique, le point M est repéré par ses coordonnées X et Y, tandis que le point M' est repéré par ses coordonnées X' et Y'. Pour déplacer le point M vers les point m', les coordonnées de M' évoluent de la manière suivante :

$X' = X + P.\cos \gamma$
$Y' = Y + P.\sin \gamma$

avec P = distance entre les points M et M' et
$\gamma$ = angle formé par le segment MM' par rapport à l'abscisse X.

Les déplacements sont donc donnés par les relations suivants :

$$M \begin{vmatrix} X & = & Xa & + & L.\cos\beta & = & Xb & - & L.\cos\beta \\ Y & = & L.\sin\beta \end{vmatrix}$$

$$M' \begin{vmatrix} X' & = & Xa' & + & L.\cos\beta' & = & Xb' & - & L.\cos\beta \\ Y' & = & L.\sin\beta \end{vmatrix}$$

En résolvant les équations, on obtient donc comme valeur de déplacement d1 et d2 :

$d1 = Xa' - Xa = (X' - L.\cos \beta') - (X - L.\cos \beta)$
$d1 = X' - L.\cos(ARcsin(Y'/L)) - X + L.\cos(Arcsin(Y/L))$
$d2 = Xb' - Xb = (X' + L.\cos \beta') - (X + L.\cos \beta)$
$d2 = X' + L.\cos(Arcsin(Y'/L)) - X - L.\cos(Arcsin(Y/L))$

Afin de contrôler les déplacements, de telles équations peuvent être traitées par des moyens de calculs électroniques.

A cet égard, le dispositif de la présente invention comporte des moyens de traitement et de calcul électroniques pour commander les déplacements Xo et X1 de chaque chariot (9, 10) afin de transformer la cinématique différentielle non linéaire en des ordres de commande adaptés aux organes moteurs (7, 8) correspondant pour obtenir le déplacement X - Y souhaité.

A titre d'exemple, les organes moteurs sont constitués par deux moteurs pas à pas à deux sens de rotation, commandés par un calculateur organisé autour d'un microprocesseur et de cartes PIA. De telles techniques sont connues de l'Homme du métier du domaine considéré.

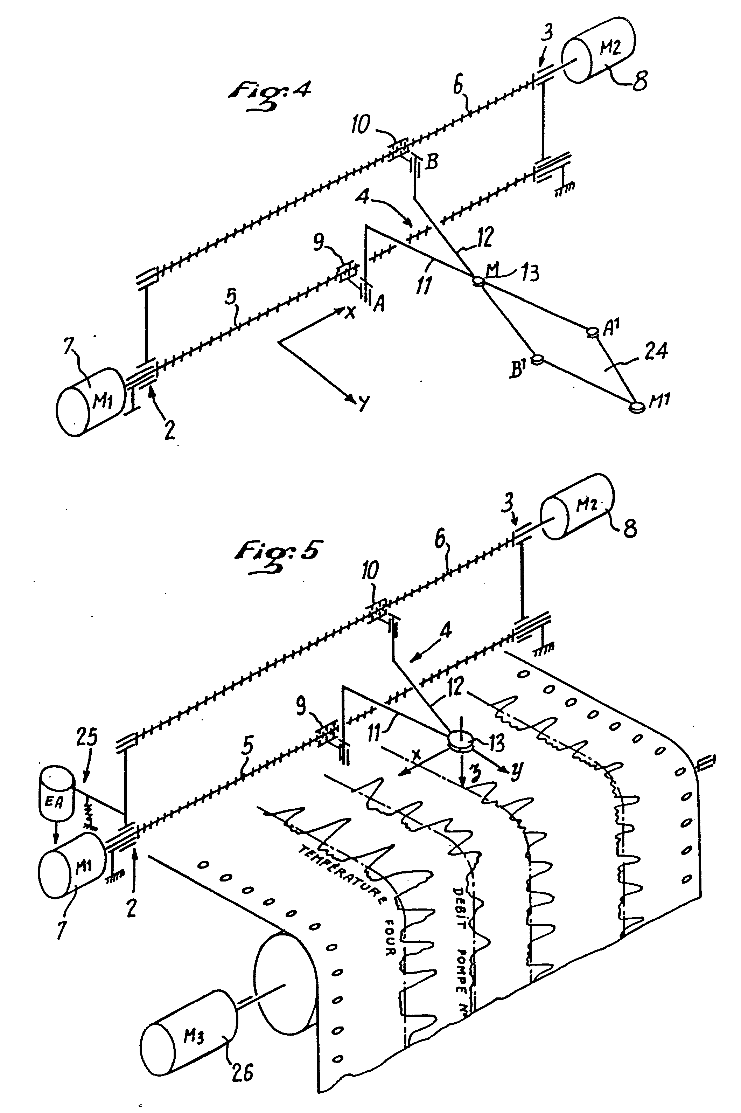

La figure 3 montre un second exemple de réalisation du dispositif de balayage dans lequel les moyens de commande de déplacement (2, 3) sont constitués par deux ensembles cabestans (14, 15).

Cesdits ensembles (14, 15) sont constitués de manière traditionnelle par les organes moteur (16, 17) équipés de poulies de renvoi et de câbles pour former lesdits systèmes (14, 15).

De plus, ces derniers sont disposés parallèlement et coopérent avec deux chariots (18, 19) solidaires respectivement de chaque cabestan (14, 15).

Pour faciliter le guidage, le dispositif de balayage de la présente invention présente des moyens de guidage unidirectionnel (20) permettant de conduire dans leur déplacement les chariots (18, 19) selon un même axe de déplacement X ou deux axes parallèles Xo et X1.

Comme dans le mode de réalisation de la figure 2, les moyens de commande de déplacement (2) et (3) sont tels que les chariots (18, 19) peuvent se déplacer indépendamment l'un de l'autre, respectivement selon une direction X parallèle aux mouvements Xo et X1.

Dans le cas particulier de la figure 3, lesdits moyens de guidage (20) sont constitués par au moins une tige sur laquelle coulissent lesdits chariots (18) et (19) selon la direction X.

Comme dans le système représenté à la figure 2, le dispositif comporte également des moyens de liaison articulés formés par un ensemble de deux tiges (21, 22) disposées en triangle, dont l'une de leurs extrémités (23) sont réunies entre elles, les deux autres extrémités étant reliées respectivement à chaque chariot (18, 19).

La figure 4 montre une variante de réalisation du dispositif de la figure 2 dans lequel les moyens de liaison articulés sont adaptés pour obtenir un déplacement amplifié.

Ceci est notamment obtenu en utilisant le système connu du pantographe repéré sur la figure par le losange M.A1.M1.B1, l'amplification étant proportionnelle au dimensionnement des leviers par rapport à

4

l'articulation (13).

Par ailleurs, selon une autre caractéristique de la présente invention, le dispositif de balayage comporte, dans certains cas, des moyens de rotation (25) desdits moyens de commande de déplacement (2) et/ou (3) pour obtenir un léger mouvement au niveau de l'extrémité commune (13) des moyens de liaison articulés selon un axe Z perpendiculaire aux deux axes de déplacement X et Y.

Naturellement, ces moyens de rotation (25) sont applicables dans tous les cas de figure 2, 3, 4. L'exemple représenté à la figure 5 montre une utilisation avantageuse de cesdits moyens (25).

En effet, la figure 5 représente un exemple d'application du dispositif tel qu'illustré notamment figure 2 pour une table traçante.

En effet, au niveau de l'extrémité commune (13) des moyens articulés, on place une pointe d'écriture qui permet de tracer notamment des courbes ou toute autre inscription sur une feuille de papier.

Dans le cas présent, un système informatique enregistre numériquement après échantillonnage plusieurs entrées analogiques qui sont ensuite tracées sur un papier. Ces techniques sont connues de l'homme du métier considéré.

Afin d'assurer le déroulement du papier, le dispositif comporte un moteur adapté schématiquement représenté en (26).

En ce qui concerne l'interruption d'écriture, on fera appel avantageusement aux moyens de rotation (25), substantiellement constitués par exemple par un électroaimant, afin de lever la pointe d'écriture du papier.

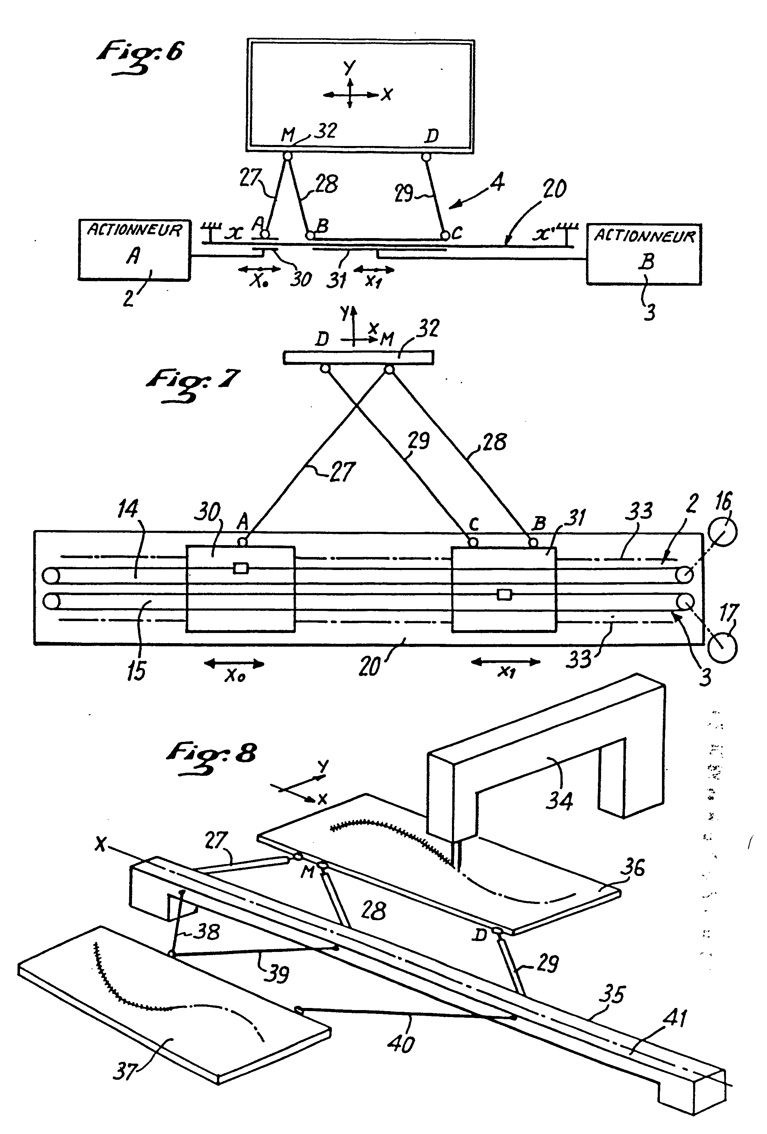

Les figures 6 à 8 montrent une application différente dans le sens qu'au lieu de déplacer un point, on déplace une droite, un plan ou un objet volumique.

La figure 6 montre le principe de fonctionnement du système qui est calqué sur celui des systèmes décrits précédemment.

En effet, on retrouve des moyens de commande de déplacement (2) et (3), des moyens de liaison articulés (4) et des moyens de guidage unidirectionnel (20).

Toutefois, la différence essentielle réside dans la réalisation des moyens de liaison articulés (4).

Plus précisément, comme le montrent les figures 6 et 7, les moyens de liaison articulés (4) sont formés par un ensemble d'au moins trois tiges (27, 28, 29) définissant un trapèze A.C.B.M.D.

Deux des tiges (27, 28) étant disposées en triangle A.M.B dont l'une de leurs extrémités M sont réunies entre elles en (32). La troisième tige (29) est disposée parallèlement à l'une des deux premières tiges (27, 28) pour définir avec elle un parallèlogramme M.B.C.D.

Ainsi, les points M et D définissent un segment droit sur lequel on pourra venir adapter tout objet ou surface à déplacer selon des coordonnées X et Y.

Ainsi, comme le montre la figure 6, tout déplacement Xo et/ou X1 des chariots (30) et (31) provoquera un déplacement X-Y du segment commun M.D.

En effet, les extrémités des deux tiges (28, 29) sont réunies d'une part au segment M.D. et d'autre part au chariot (31) commandé par les moyens de déplacement (3). De même, en ce qui concerne la dernière tige (27), l'extrémité opposée au point commun (32) est réunie au chariot (30) actionné par les moyens de déplacement (2).

En ce qui concerne les déplacements Xo et X1 des chariots nécessaires pour obtenir les déplacements X et Y, on se reportera à la démonstration géométrique faite en regard de la figure 9 qui peut être tout à fait transposée.

Il en est de même pour les moyens de traitement et de calcul électroniques commandant lesdits déplacements Xo et X1 de chaque chariot (30) et (31).

La figure 7 montre un exemple de réalisation pratique dans laquelle les moyens de guidage unidirectionnel (20) sont constitués substantiellement par une table équipée de rainures (33) aptes à guider les chariots (30) et (31).

De plus, sur cette table sont disposés des systèmes cabestans du type de ceux décrits en regard de la figure 3 mais dans un plan horizontal.

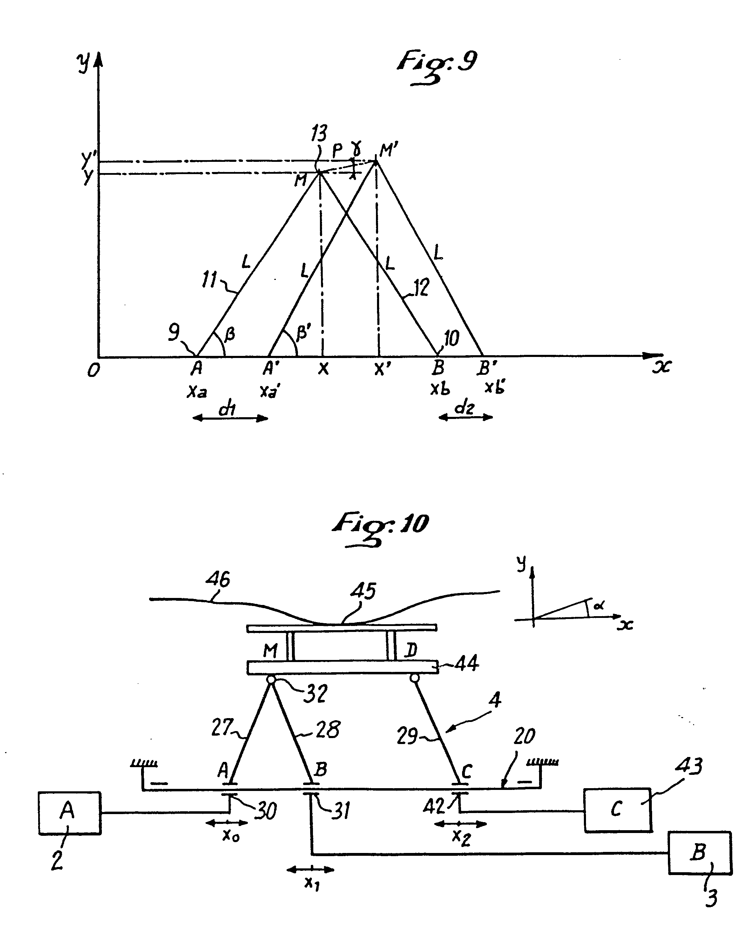

La figure 8 montre un exemple d'utilisation du dispositif illustré à la figure 7 équipant des machines du type brodeuse.

Plus précisément, la brodeuse est repérée (34) et le dispositif de balayage mécanique (35). Ce dispositif de balayage mécanique est constitué de façon similaire à ce qui vient d'être décrit et on retrouvera notamment les tiges (27, 28, 29) des moyens de liaison (4) aux extrémités desquelles est fixé un cadre de broderie (36) qui se déplacera selon les coordonnées X et Y.

De plus, il est à remarquer que l'on dispose avantageusement un second cadre (37) relié par des tiges articulées (38, 39, 40) fonctionnant selon le même principe que celles repérées (27 à 29) afin de réaliser un déplacement symétrique par rapport à l'axe longitudinal de la table (41).

5

La figure 10 montre une application voisine de celles décrites aux figures 6 à 8 main au lieu de déplacer une droite ou un plan parallèlement à l'axe X-X', le dispositif de la figure 10 permet en outre une rotation supplémentaire α.

Ce dispositif peut être intéressant notamment pour équiper une machine de découpage dans laquelle la ligne de découpe est quelconque selon X et Y et de plus où il est nécessaire de placer le couteau de découpe selon une tangente à la trajectoire de la coupe.

A la figure 10, le dispositif de découpe (44) est schématisé par le couteau (45) qui doit suivre la ligne de découpe repérée (46).

En ce qui concerne la structure du dispositif de balayage, on retrouve, comme aux figures 6 à 8, les moyens de commande de déplacement (2) et (3), les moyens de liaison articulés (4) et les moyens de guidage unidirectionnels (20).

Toutefois, le dispositif comporte un troisième moyen de commande de déplacement (43) afin de permettre le déplacement du point C ou plus précisément du chariot (42) selon les moyens de guidage (20) et autoriser un troisième déplacement élémentaire X2.

Ainsi, le dispositif de balayage de la figure 10 crée trois mouvements élémentaires dits "parallèles" dont les directions parallèles, et les moyens de liaison articulés (4) qui relient respectivement la droite M.D à déplacer (44) à chaque moyen de commande de déplacement (2, 3, 43) aptes à transformer les trois mouvements élémentaires dits "parallèles" en deux mouvements élémentaires dits "orthogonaux" X, Y et un mouvement de rotation α.

Cela étant, la différence essentielle avec le dispositif de la figure 6 réside dans le fait que les points B et C ont été désolidarisés et reliés chacun à un actionneur B, C.

En synchronisant. les actionneurs B et C, c'est-à-dire en les déplaçant dans le même sens et à la même vitesse, on obtiendra un système rigoureusement identique à celui de la figure 6.

Tandis que si on déplace B et C indépendamment l'un de l'autre, on obtiendra en outre des déplacements X, Y prévus, un déplacement en rotation α autour du point M du segment M.D qui porte notamment le couteau (45).

Cette disposition permettra donc de suivre par exemple la ligne de coupe (46) au fur et à mesure du déplacement tout en positionnant le couteau de coupe (45) tangent à la trajectoire de la courbe.

Naturellement, d'autres mises en oeuvre de la présente invention, à la portée de l'Homme de l'Art, auraient pu être envisagées sans pour autant sortir du cadre de celle-ci. De plus, les applications mentionnées ne limitent en aucun cas le dispositif de balayage de la présente invention à celles-ci.

## Revendications

1. Dispositif de balayage mécanique, permettant de déplacer dans un plan horizontal bidirectionnellement un point, une droite, une surface ou un objet (1 ; 13 ; 23 ; 36) en abscisse X et/ou en ordonnée Y, comprenant des moyens de commande de déplacement (2, 3) **caractérisé** par le fait que lesdits moyens de commande de déplacement (2, 3) sont disposés tels qu'ils créent au moins deux mouvements élémentaires dits "parallèles" dont les directions sont parallèles et qu'il comporte des moyens de liaison articulés (4) qui relient respectivement ledit point, droite, surface ou objet à déplacer (1 ; 13 ; 23 ; 36) à chaque moyen de commande de déplacement (2, 3) aptes à transformer les deux mouvements élémentaires dits "parallèles" en deux mouvements élémentaires dits "orthogonaux".

2. Dispositif de balayage, selon la revendication 1, comprenant au moins deux moyens moteurs de commande de déplacement (2, 3), **caractérisé** par le fait qu'il comporte des moyens de guidage unidirectionnel (20) permettant de conduire dans leur déplacement deux chariots (18, 19 ; 30, 31), commandés par lesdits organes moteurs (16, 17) selon un même axe de déplacement X ou deux axes parallèles Xo et X1.

3. Dispositif de balayage, selon la revendication 1, **caractérisé** par le fait que lesdits moyens de liaison articulés (4) sont constitués par un ensemble de tiges (11, 12 ; 21, 22 ; 27, 28) rigides, articulées à leur point de concours (13 ; 23 ; 32) formant une figure polygonale déformable.

4. Dispositif de balayage, selon la revendication 1, **caractérisé** par le fait que les moyens de commande de déplacement (2, 3) sont constitués par deux tiges filetées (5, 6), commandées chacune par un organe moteur (7, 8), disposées parallèlement, coopérant avec deux chariots (9, 10) portés et commandés respectivement par chaque tige filetée (5, 6) apte à se déplacer indépendamment respectivement selon deux directions Xo et X1 parallèles.

5. Dispositif de balayage, selon la revendication 2, **caractérisé** par le fait que les moyens de commande de déplacement (2, 3) sont constitués par deux ensembles cabestans (14, 15) commandés chacun par un organe moteur (16, 17), disposés parallèlement et coopérant avec deux chariots (18, 19 ; 30, 31) solidaires respectivement de chaque cabestan (14, 15) et guidés par lesdits moyens de guidage unidirectionnel (20), aptes à se déplacer indépendamment respectivement selon une direction X.

6. Dispositif de balayage, comprenant au moins deux chariots (9, 10 ; 18, 19 ; 30, 31), selon la revendication 3, **caractérisé** par le fait que les moyens de liaison articulés (4) sont formés par un ensemble de deux tiges (11, 12; 21, 22 ; 27, 28) disposés en triangle dont l'une de leurs extrémités (13 ; 23; 32) sont réunies entre elles, les deux autres extrémités étant reliées respectivement à chaque chariot (9, 10 ; 18, 19 ; 30, 31), un déplacement Xo et/ou X1 des chariots provoquant un déplacement X et/ou Y de l'extrémité commune (13 ; 23 ; 32).

7. Dispositif de balayage, comprenant au moins deux chariots (30, 31), selon la revendication 3, **caractéri sé** par le fait que les moyens de liaison articulés (4) sont formés par un ensemble d'au moins trois tiges (27, 28, 29) définissant un trapèze A.C.B.M.D., deux tiges (27, 28) étant disposées en triangle A.M.B. dont l'une de leurs extrémités M (32) étant réunies entre elles, les deux autres extrémités étant respectivement reliées à chaque chariot (30, 31), la troisième tige (29) étant disposée parallèlement à l'une des deux premières tiges (27) ou (28) pour définir avec elle un parallèlogramme M.B.C.D., un déplacement Xo et/ou XI des chariots (30, 31) provoquant un déplacement X et/ou Y du segment commun MD.

8. Dispositif de balayage, selon la revendication 1, **caractérisé** par le fait qu'il comporte des moyens de traitement et de calcul électroniques pour commander les déplacements Xo et X1 de chaque chariot (9, 10 ; 18, 19 ; 30, 31) afin de transformer la cinématique différentielle non linéaire en des ordres de commande adaptés aux organes moteurs (7, 8 ; 16, 17) correspondant pour obtenir le déplacement X-Y souhaité.

9. Dispositif de balayage, selon la revendication 1, **caractérisé** par le fait qu'il comporte des moyens de rotation (25) desdits moyens de commande de déplacement (2) et/ou (3) pour obtenir un léger mouvement dudit point, droite, surface ou objet (1 ; 13 ; 23 ; 32) selon un axe Z perpendiculaire aux deux axes X et Y.

10. Dispositif de balayage mécanique, selon la revendication 1, **caractérisé** par le fait qu'il comprend trois moyens de commande de déplacement (2, 3, 43) disposés tels qu'ils créent trois mouvements élémentaires dits "parallèles" Xo X1, X2, dont les directions sont parallèles et qu'ils comportent des moyens de liaison articulés (4) qui relient respectivement ledit objet à déplacer, point ou droite (44, 45) à chaque moyen de commande de déplacement (2, 3, 43) aptes à transformer les trois mouvements éléments X0, X1, X2 dits "parallèles" en deux mouvements élémentaires dits "orthogonaux" X et Y et un mouvement de rotation $\alpha$.

Fig. 1

Fig. 2

Fig. 3

*Fig.4*

*Fig.5*

*Fig. 6*

*Fig. 7*

*Fig. 8*

Fig. 9

Fig. 10